# EUROPÄISCHE PATENTSCHRIFT

(11) **EP 1 373 966 B1**
(45) Veröffentlichungstag und Bekanntmachung des Hinweises auf die Patenterteilung: **16.06.2010**
(21) Anmeldenummer: 02712946.9
(22) Anmeldetag: 15.03.2002
(51) Int. Cl.: G02B 27/09, G02B 27/10

(54) **STRAHLFORMUNGSVORRICHTUNG, ANORDNUNG ZUR EINKOPPLUNG EINES LICHTSTRAHLS IN EINE LICHTLEITFASER SOWIE STRAHLDREHEINHEIT FÜR EINE DERARTIGE STRAHLFORMUNGSVORRICHTUNG ODER EINE DERARTIGE ANORDNUNG**
BEAM SHAPING DEVICE, SYSTEM FOR LAUNCHING A LIGHT BEAM INTO AN OPTICAL FIBBER, AND BEAM ROTATION UNIT FOR SUCH A BEAM SHAPING DEVICE OR SUCH A SYSTEM
DISPOSITIF DE FORMATION DE FAISCEAU, SYSTEME PERMETTANT D'INJECTER UN FAISCEAU LUMINEUX DANS UNE FIBRE OPTIQUE ET UNITE DE ROTATION DE FAISCEAU DESTINEE A UN TEL DISPOSITIF DE FORMATION DE FAISCEAU OU A UN TEL SYSTEME

(30) Priorität: 17.03.2001 DE 10113019
(43) Veröffentlichungstag der Anmeldung: 02.01.2004
(73) Patentinhaber: LIMO Patentverwaltung GmbH & Co. KG, 36419 Gerstengrund (DE)
(72) Erfinder: MIKHAILOV, Alexei, 44227 Dortmund (DE)
(74) Vertreter: Basfeld, Rainer
(86) Internationale Anmeldenummer: PCT/EP2002/002920
(87) Internationale Veröffentlichungsnummer: WO 2002/075432

(56) Entgegenhaltungen:
- EP-A- 0 298 490
- EP-A- 0 961 152
- WO-A-00/57229
- WO-A-98/08128
- US-A- 5 513 201
- US-A- 5 808 323

## Beschreibung

Die vorliegende Erfindung betrifft eine Vorrichtung für die Formung des Querschnitts eines Lichtstrahls gemäß dem Oberbegriff des Anspruchs 1.

Weiterhin betrifft die vorliegende Erfindung eine Anordnung zur Einkopplung eines von einer langgestreckten Laserlichtquelle ausgehenden Lichtstrahls mit einem länglichen Querschnitt in eine Lichtleitfaser gemäß dem Oberbegriff des Anspruchs 15.

Weiterhin betrifft die Erfindung eine Strahldreheinheit für eine derartige Vorrichtung gemäß dem Oberbegriff des Anspruchs 16.

Eine Vorrichtung der eingangs genannten Art ist aus der WO 00/57229 A1 bekannt. Mit dieser Vorrichtung wird der Querschnitt des von einem Laserdiodenbarren ausgehenden Lichts geformt. Dazu wird in Slow-Axis-Richtung das von dem Laserdiodenbarren ausgehende Licht in zwei Teile geteilt. Dabei wird die Linearpolatisation eines der Teile mittels eines Halbwellenlängenplättchens um 90° gedreht. Weiterhin wird dieser Teil von einem Spiegel um 90° abgelenkt und trifft auf eine erste Eintrittsfläche eines Polarisationswürfels. Der andere Teil des Lichts breitet sich ungehindert aus und trifft auf eine zweite Eintrittsfläche des Polarisationswürfels, Von dem Polarisationswürfel werden die beiden Teile vollständig überlagert, so dass der Querschnitt des Lichts hinter dem Polarisationswürfel in Slow-Axis-Richtung nur noch halb so groß und in Fast-Axis-Richtung genauso groß wie vor dem Eintritt in die Vorrichtung ist.

Eine weitere Vorrichtung für die Formung des Querschnitts eines Lichtstrahls sowie eine Anordnung zur Einkopplung eines von einer langgestreckten Laserlichtquelle ausgehenden Lichtstrahls mit einem länglichen Querschnitt in eine Lichtleitfaser sind aus dem deutschen Patent DE 195 37 265 C1 bekannt. Bei der darin beschriebenen Ausführungsform einer Strahlformungseinheit wird als Strahlteilermittel ein Rhomboidprismenpaar verwendet, das die auftreffende Strahlung in zwei Teilstrahlbündel trennt. Als Strahlumlenkmittel dienen zwei in den entsprechenden Teilstrahlengängen integrierte Halbwürfelprismen, wobei aufgrund des relativ langen in dieser Strahlungsformungseinheit zurückgelegten Wegs der Teilstrahlbündel zwischen dem Rhomboidprismenpaar und den Halbwürfelprismen jeweils noch eine Linse angeordnet ist. Als Strahlvereinigungsmittel dient ein fünftes Prisma, das die darauf auftreffenden Teilstrahlbündel umlenkt und wieder zusammenführt.

Als nachteilig bei einer derartigen Strahlformungseinheit erweist sich, dass insgesamt sieben Bauteile Verwendung finden, wobei jeder der einzelnen Teilstrahlen durch acht gegebenenfalls teilweise absorbierende Oberflächen optischer Bauelemente hindurchtritt und jeweils an zwei weiteren gegebenenfalls nicht zu 100% reflektierenden Oberflächen der vorgenannten Bauteile reflektiert wird. Aufgrund der vielen Oberflächen, die transmittiert werden müssen bzw. an denen reflektiert werden muss, muss ein relativ großer Aufwand betrieben werden, um diese Oberflächen entsprechend hinsichtlich Transmission bzw. Reflexion zu vergüten. Insbesondere wenn mehrere dieser Strahlformungseinheiten hintereinander aufgebaut werden, wird eine derartige Strahlformungsvorrichtung weniger effektiv sein. Weiterhin werden aufgrund der vielen verwendeten Bauteile und aufgrund des hohen Vergütungsaufwandes derartige Strahlformungseinheiten extrem kostenintensiv sein.

Eine Anordnung der eingangs genannten Art wird in der Regel immer dann Verwendung finden, wenn beispielsweise von einem Laserdiodenbarren ausgehende Laserstrahlung auf eine Lichtleitfaser fokussiert werden soll. Insbesondere aufgrund der beinahe linienförmigen Laserlichtquelle mit einzelnen beabstandet über die Länge der Linie angeordneten Emissionszentren und der unterschiedlichen Divergenzen in Slow-Axis- und Fast-Axis-Richtung erweist es sich als sinnvoll, eine Strahlformungsvorrichtung der eingangs genannten Art zu verwenden, um das von dem Laserdiodenbarren ausgehende Laserlicht mit beinahe linienförmigem Querschnitt mehrfach zu formen bzw. zusammenzufatten, so dass ein Laserstrahlbündel mit beinahe quadratischem Querschnitt entsteht, das dann einfacher auf eine Lichtleitfaser zu fokussieren ist. Die Effektivität und Wirtschaftlichkeit einer derartigen Anordnung ergibt sich verständlicherweise aus der Effektivität und Wirtschaftlichkeit der darin verwendeten Strahlformungsvorrichtung.

Eine Strahldreheinheit der eingangs genannten Art ist aus dem US-Patent US 5,513,201 bekannt. Vermittels der darin beschriebenen Strahldreheinheiten soll die von einem Laserdiodenbarren ausgehende Laserstrahlung auf eine Lichtleitfaser fokussiert werden. Bei den bereits beschriebenen unterschiedlichen Divergenzen in Slow-Axis- und Fast-Axis-Richtung des von dem Laserdiodenbarren ausgehenden Laserlichts erweist sich eine Drehung der einzelnen Lichtstrahlen als sinnvoll, weil dadurch die Divergenzen in Slow-Axis- und Fast-Axis-Richtung getauscht werden können. Die in dem vorgenannten US-Patent beschriebenen Strahldreheinheiten verwenden für die Strahldrehung Prismen. Diese Prismen sind jedoch ausgesprochen kompliziert aufgebaut und nur mit einem sehr hohen Fertigungsaufwand herzustellen.

Das der vorliegenden Erfindung zugrundeliegende Problem ist die Schaffung einer Strahlformungsvorrichtung der eingangs genannten Art, einer Strahldreheinheit sowie einer Anordnung der eingangs genannten Art, die effektiv und kostengünstig aufgebaut sind.

Dies wird hinsichtlich der Strahlformungsvorrichtung durch die kennzeichnenden Merkmale des Anspruchs 1, hinsichtlich der Anordnung durch die in Anspruch 15 beschriebene Wahl einer Strahlformungsvorrichtung mit den kennzeichnenden Merkmalen eines der Ansprüche 1 bis 14 und hinsichtlich der Strahldreheinheit durch die kennzeichnenden Merkmale des Anspruchs 16 erzielt.

Gemäß Anspruch 1 ist vorgesehen, dass die Strahlformungseinheit ein als Prisma ausgeführtes Polarisationsdrehelement umfasst, das so angeordnet ist, dass der Querschnitt des entsprechenden Teilstrahls bei dem Hindurchtritt durch das Prisma gedreht wird, wobei dadurch auch eine entsprechende Drehung der Linearpolarisation dieses Teilstrahls erfolgt. Ein derartig angeordnetes Prisma stellt eine sehr elegante Ausführungsform eines Polarisationsdreheiementes dar, weil das Prisma noch weitere Funktionen ausüben kann. Es besteht beispielsweise die Möglichkeit, dass das Prisma gleichzeitig als Strahlumlenkmittel dient, wobei dann in dem Prisma der entsprechende Teilstrahl reflektiert, insbesondere zweimal reflektiert werden kann. Auf diese Weise wird die Anzahl der Transmissionen und Reflexionen reduziert.

Eine erfindungsgemäße Strahlteiler- und Strahlvereinigungseinheit kann zumindest abschnittsweise aus einem doppelbrechenden Material bestehen und dabei beispielsweise als Glan-Thompson-Prisma ausgeführt sein.

Alternativ dazu kann die Strahlteiler- und Strahlvereinigungseinheit als sogenannter Polarisationswürfel ausgeführt sein, wobei der Polarisationswürfel aus zwei im wesentlichen identischen prismenähnlichen Teilen besteht, die eine Grenzfläche längs einer Diagonalfläche des Würfels miteinander bilden. Mindestens eines der beiden prismenähnlichen Teile kann im Bereich der Grenzfläche mit einer polarisationsselektiven Beschichtung versehen sein. Aufgrund dieser Beschichtung können derartige Polarisationswürfel so gestaltet werden, dass unter einem bestimmten Winkel auf die Grenzfläche auftreffende Lichtstrahlen einerersten Linearpolarisationsrichtung total reflektiert werden, wohingegen Lichtstrahlen einer zweiten, zu der ersten Linearpolarisationsrichtung senkrechten, Richtung durch die Grenzfläche hindurchtreten. Wenn die beiden Teilstrahlen aus unterschiedlichen Richtungen, die einen Winkel von 90° miteinander einschließen, in den Polarisationswürfel einfallen und die Grenzfläche derart orientiert ist, dass die Winkelhalbierende des Winkels zwischen den Einfallsrichtungen der beiden Teilstrahlen in der Ebene der Grenzfläche liegt, können die Teilstrahlen aufgrund der vorbeschriebenen polarisationsselektiven Reflexion bzw. Transmission an der Grenzfläche zusammengefügt werden und die Strahlteiler- und Strahlvereinigungseinheit im wesentlichen an der gleichen Stelle in die gleiche Richtung verlassen.

Die Strahlumlenkmittel können einen Spiegel umfassen, der vorzugsweise unter einem Winkel von 45° in dem zweiten der beiden Teilstrahlen angeordnet sein kann. Insbesondere kann vorgesehen sein, dass das Prisma, der Spiegel und die Strahlteiler- und Strahlvereinigungseinheit derart angeordnet sind, dass ein Teilstrahl direkt auf die erste Eintrittsfläche der Strahlteiler- und Strahlvereinigungseinheit auftreffen kann, wohingegen der zweite Teilstrahl von dem Spiegel in das Prisma reflektiert wird, in dem der Strahlquerschnitt des Teilstrahls um 90° gedreht wird, und aus dem der Teilstrahl in eine zweite Eintrittsfläche der Strahlteiler- und Strahlvereinigungseinheit eintreten kann. Auf diese Weise wird die Zahl der Reflexionen und Transmissionen für die beiden Teilstrahlen minimiert, wobei gleichzeitig durch das Prisma eine sehr elegante Strahlumlenkung und Polarisationsdrehung erzielt wird.

Gemäß einer bevorzugten Ausführungsform der vorliegenden Erfindung umfasst die Vorrichtung mehr als eine Strahlformungseinheit, die derart nacheinander angeordnet sind, dass der Querschnitt des Lichtstrahls in jeder der Strahlformungseinheiten verändert, insbesondere in einer Richtung verkleinert werden kann. Auf diese Weise lässt sich insbesondere ein von einem Laserdiodenbarren ausgehender Laserstrahl derart mehrfach in einer Richtung verkleinern, dass damit die erfindungsgemäße Anordnung für die Einkopplung in eine Lichtleitfaser optimiert werden kann.

Gemäß einer weiteren bevorzugten Ausführungsform der vorliegenden Erfindung umfasst die Vorrichtung mehr als eine Strahlformungseinheit, die derart nebeneinander angeordnet sind, dass von nebeneinander liegenden Lichtquellen ausgehende Lichtstrahlen in den nebeneinander angeordneten Strahiformungseinheiten verändert, insbesondere in einer Richtung verkleinert werden können. Auf diese Weise können beispielsweise in einer Anordnung gemäß Anspruch 15 die von den einzelnen Emissionszentren eines Laserdiodenbarrens ausgehende Lichtstrahlen gleichzeitig in den nebeneinander angeordneten Strahlformungseinheiten hinsichtlich ihres Strahlquerschnitts verändert werden.

Dabei können die nebeneinander angeordneten Strahlformungseinheiten ein Array von Prismen umfassen, wobei jedes der einzelnen Prismen des Arrays gleichzeitig als Polarisationsdrehelement und als Umlenkmittel für eine jede der einzelnen Strahlformungseinheiten dient. Durch die Zusammenfassung der einzelnen Prismen zu einem Array wird eine kostengünstig herstellbare Ausführungsform der nebeneinander angeordneten Strahlformungseinheiten geschaffen. Außerdem ist ein derartiges Array leichter handhabbar, weil die Abstände der einzelnen Prismen zueinander und die Orientierung der einzelnen Prismen zueinander durch den Herstellungsprozeß vorgegeben werden können. Gegebenenfalls besteht die Möglichkeit, die weiteren Elemente einer Strahlformungseinheit in das Array zu integrieren oder werkseitig fest an dem Array anzubringen.

Es besteht durchaus die Möglichkeit, mehrere Arrays bzw. mehrere von diesen Arrays gebildete Strahlformungseinheiten hintereinander anzuordnen, um den Querschnitt der einzelnen Lichtstrahlen sukzessive in den hintereinander angeordneten Einheiten zu verändern.

Bei einer Strahldreheinheit gemäß Anspruch 16 ist vorgesehen, dass das mindestens eine Prisma zwei als gleichschenklig rechtwinklige Dreiecke ausgebildete Grundflächen und drei rechteckige Prismenflächen aufweist, wobei der durch das mindestens eine Prisma hindurchtretende Lichtstrahl an den beiden Prismenflächen gespiegelt werden kann, die sich zwischen den Katheten der Grundflächen erstrecken. Der Aufbau des Prismas als derartiges gleichschenklig rechtwinkliges Prisma stellte eine sehr einfache und kostengünstig herstellbare Wahl dar.

Insbesondere besteht die Möglichkeit, dass die Strahldreheinheit eine Anzahl von Prismen umfasst, die zu einem Array zusammengefasst sind, so dass die Querschnitte von von nebeneinander angeordneten Lichtquellen ausgehenden Lichtstrahlen gedreht werden können. Ein derartiges Array von Prismen kann dann beispielsweise in eine Anordnung gemäß Anspruch 15 integriert werden, um die von den einzelnen Emissionszentren des Laserdiodenbarrens ausgehenden Lichtstrahlen zu drehen, um damit eine Vertauschung der Fast-Axis-Divergenz mit der Slow-Axis-Divergenz herbeizuführen. Ein derartiges Array von Zylinderlinsen lässt sich im Gegensatz zu den aus dem Stand der Technik bekannten Strahldreheinheiten einfacher herstellen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht einer Vorrichtung für die Formung des Querschnitts eines Lichtstrahls;
- Fig. 2a: einen Strahlquerschnitt eines Lichtstrahls vor dem Eintritt in die Vorrichtung gemäß Fig. 1;
- Fig. 2b: einen Strahlquerschnitt des Lichtstrahls gemäß Fig. 2a nach Hindurchtritt durch die Vorrichtung gemäß Fig. 1;
- Fig. 3a: eine Draufsicht auf eine erfindungsgemäße Vorrichtung;
- Fig. 3b: eine Seitenansicht der Vorrichtung gemäß Fig. 3a;
- Fig. 4a: den Querschnitt eines Lichtstrahls vor dem Eintritt in eine Vorrichtung gemäß Fig. 3;
- Fig. 4b: den Querschnitt des Lichtstrahls gemäß Fig. 4a nach dem Hindurchtritt durch die Vorrichtung gemäß Fig. 3;
- Fig. 5: eine schematische Draufsicht auf eine weitere Ausführungsform einer erfindungsgemäßen Vorrichtung.

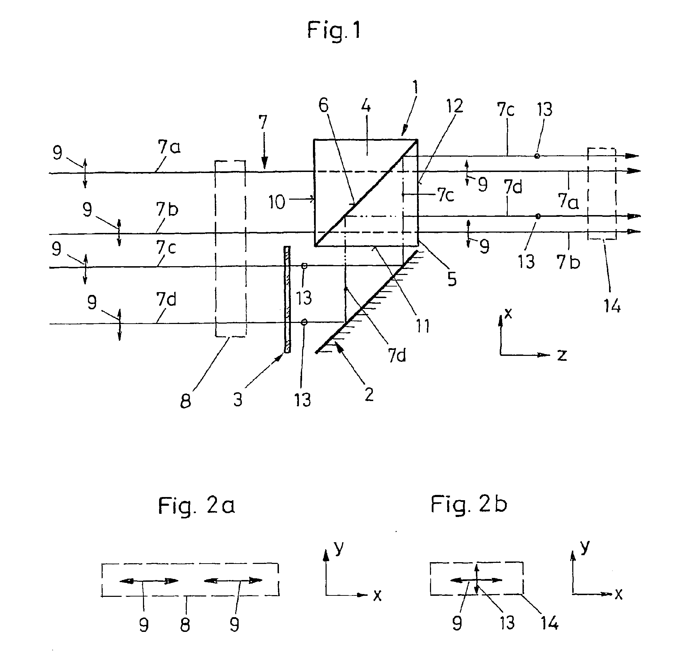

Wie aus Fig. 1 ersichtlich ist, umfasst die darin abgebildete Vorrichtung für die Formung des Querschnitts eines Lichtstrahls eine Strahlformungseinheit mit einer polarisationsselektiven Strahlteiler- und Strahlvereinigungseinheit 1, einem Spiegel 2 und einem Polarisationsdrehelement 3. Die Strahlteiler- und Strahlvereinigungseinheit 1 ist als aus dem Stand der Technik hinlänglich bekannter sogenannter Polarisationswürfel ausgeführt. Ein derartiger Polarisationswürfel besteht in der Regel aus Quarzglas oder einem vergleichbaren Material und weist zwei prismenförmige Hälften 4, 5 auf, die längs einer diagonalen Grenzfläche 6 des Würfels miteinander verbunden, insbesondere miteinander verkittet sind. Die Grenzfläche 6 ist mit einer insbesondere mehrlagigen polarisationsselektiven Beschichtung versehen. Aufgrund dieser Beschichtung können derartige Polarisationswürfel so gestaltet werden, dass unter einem bestimmten Winkel auf die Grenzfläche 6 auftreffende Lichtstrahlen einer ersten Polarisationsrichtung total reflektiert werden, wohingegen Lichtstrahlen einer zweiten, zu der ersten Polarisationsrichtung senkrechten, Richtung durch die Grenzfläche hindurchtreten. Diesen Effekt macht sich die Erfindung zu nutze, wie im folgenden noch weiter ausgeführt wird.

In Fig. 1 ist ein von links, das heißt in Z-Richtung auf die von der Vorrichtung umfasste aus Strahlteiler- und Strahlvereinigungseinheit 1, Spiegel 2 und Polarisationsdrehelement 3 bestehende Strahlformungseinheit zulaufender Lichtstrahl 7a, b, c, d ersichtlich. Der Lichtstrahl 7a, b, c, d weist einen Querschnitt 8 auf, der in Fig. 2a abgebildet ist. Weiterhin ist in Fig. 1 und Fig. 2a angedeutet, dass der Lichtstrahl 7 in X-Richtung linear polarisiert ist, was durch die Pfeile 9 verdeutlicht wird. Die abgebildeten Teilstrahlen 7a, 7b, 7c, 7d des Lichtstrahls 7 stellen beispielhafte Teilstrahlen dar.

Der Strahl 7 wird dadurch in zwei Teilstrahlbündel 7a, 7b, und 7c, 7d aufgeteilt, dass das erste Teilstrahlbündel 7a, 7b senkrecht auf eine erste Eintrittsfläche 10 der Strahlteiler- und Strahlvereinigungseinheit 1 auftrifft und durch diese hindurchtritt. Dahingegen läuft das zweite Teilstrahlbündel 7c, 7d an der in Fig. 1 Unterseite der Strahlteiler- und Strahlvereinigungseinheit 1 vorbei und trifft auf den in Fig. 1 unter 45° zu dem eintretenden Teilstrahlbündel 7c, 7d ausgerichteten Spiegel 2. Von diesem Spiegel 2 wird das Teilstrahlbündel 7c, 7d in X-Richtung bzw. in Fig. 1 nach oben reflektiert und trifft auf eine zweite Eintrittsfläche 11 der Strahlteiler- und Strahlvereinigungseinheit 1, die mit der ersten Eintrittsfläche 10 einen rechten Winkel einschließt.

Das weiterhin von der Strahlformungseinheit umfasste Polarisationsdrehelement 3 ist in dem in Fig. 1 abgebildeten Ausführungsbeispiel derart angeordnet, dass das zweite Teilstrahlbündel 7c, 7d vor dem Auftreffen auf den Spiegel 2 durch das Polarisationsdrehelement 3 hindurchtritt. Alternativ dazu könnte das Polarisationsdrehelement 3 auch zwischen dem Spiegel 2 und der zweiten Eintrittsfläche 11 der Strahlteiler- und Strahlvereinigungseinheit 1 angeordnet sein. Das Polarisationsdrehelement 3 dreht die Linearpolarisation eines hindurchtretenden Lichtstrahls um 90°. Das Polarisationsdrehelement 3 kann beispielsweise als Halbwellenlängenplättchen ausgeführt sein.

Wie aus Fig. 1 ersichtlich ist, ist die als Polarisationswürfel ausgeführte Strahlteiler- und Strahlvereinigungseinheit 1 derart gestaltet und angeordnet, dass das erste durch die erste Eintrittsfläche 10 eintretende Teilstrahlbündel 7a, 7b unter einem Winkel von 45° auf die Grenzfläche 6 auftrifft, im wesentlichen ungehindert durch diese hindurchtritt und durch die der ersten Eintrittsfläche 10 gegenüberliegende Austrittsfläche 12 die Strahlteiler- und Strahlvereinigungseinheit 1 im wesentlichen in der gleichen Richtung verlässt, in der es in diese eingetreten ist. Weiterhin ist aus Fig. 1 ersichtlich, dass die Linearpolarisation des Teilstrahlbündels 7c, 7d nach Hindurchtritt durch das Polarisationsdrehelement 3 um 90° gedreht ist und sich entsprechend der in die Zeichenebene hineinzeigenden bzw. aus dieser herausragenden Pfeile 13 in Y-Richtung polarisiert ist. Das ebenfalls unter einem Winkel von 45° auf die Grenzfläche 6 auftreffende Teilstrahlbündel 7c, 7d weist somit gegenüber dem Teilstrahlbündel 7a, 7b eine um 90° gedrehte Linearpolarisationsrichtung auf, so dass das Teilstrahlbündel 7c, 7d an der Grenzfläche 6 total reflektiert wird. Daher vereinigen sich die Teilstrahlbündel 7a, 7b und 7c, 7d im Bereich der Grenzfläche 6 und treten gemeinsam aus der Austrittsfläche 12 aus, wie dies in Fig. 1 schematisch dargestellt ist. Aus Fig. 2b wird deutlich, dass der Querschnitt 14 des aus der Strahlformungseinheit austretenden Lichtstrahls 7 in X-Richtung um die Hälfte verkleinert wurde, wohingegen die Ausdehnung des Strahls in Y-Richtung beibehalten wurde. Dies hat seinen Grund darin, dass die Teilstrahlbündel 7a, 7b und 7c, 7d nach Austritt aus der Strahlformungseinheit vollständig überlappen, was unter anderem auch zur Folge hat, dass der Strahl 7 nach dem Austritt aus der Strahlformungseinheit unpolarisiert ist. In Fig. 2b sind die Linearpolarisationsrichtungen 9, 13 der beiden zu dem Querschnitt 14 beitragenden Teilstrahlbündel 7a, 7b angedeutet. Diese sind senkrecht zueinander polarisiert, so dass letztlich ein unpolarisierter Lichtstrahl 7 aus der Strahlformungseinheit bzw. der Vorrichtung austritt.

Es besteht durchaus die Möglichkeit, in einer Vorrichtung für die Formung des Querschnitts eines Lichtstrahls mehrere der in Fig. 1 abgebildeten Strahlformungseinheiten hintereinander bzw. nacheinander anzuordnen, wobei jeweils der Querschnitt des durch eine derartige Strahlformungseinheit hindurchtretenden Lichtstrahls entsprechend geformt, insbesondere in einer Richtung halbiert wird.

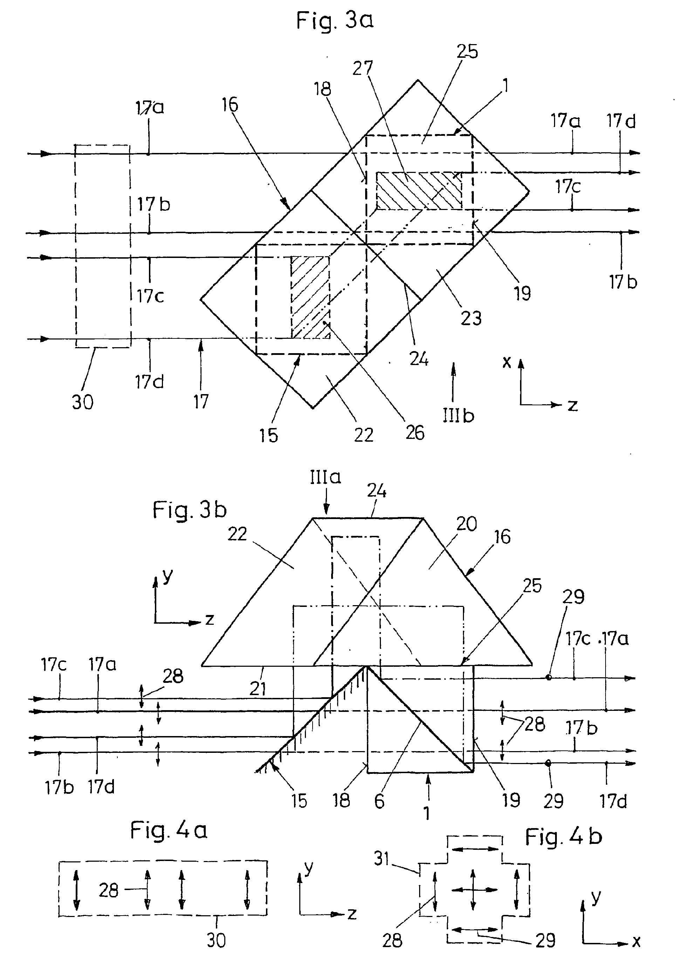

Aus Fig. 3 ist eine erfindungsgemäße Vorrichtung ersichtlich, die eine etwas anders aufgebaute Strahlformungseinheit umfasst. Diese Strahiformungseinheit weist wiederum eine Strahlteiler- und Strahlvereinigungseinheit 1 auf, die der Strahlteiler- und Strahlvereinigungseinheit 1 aus Fig. 1 entspricht. Weiterhin weist die Strahlformungseinheit Strahlumlenkmittel auf, die einen Spiegel 15 und ein Prisma 16 umfassen. Das Prisma 16 ist derart angeordnet, dass es zusätzlich als Polarisationsdrehelement dient, wie aus der nachfolgenden Beschreibung deutlich wird.

Aus Fig. 3a und Fig. 3b ist ein von links in Z-Richtung auf die Strahlformungseinheit zulaufender Lichtstrahl 17 ersichtlich, der durch beispielhaft herausgegriffene Teilstrahlen 17a, 17b, 17c und 17d verdeutlicht wird. Die Strahlteiler- und Strahlvereinigungseinheit 1 und der Spiegel 15 sind in X- und in Y-Richtung so zueinander versetzt angeordnet, dass der Spiegel 15 an eine sich in Y-Richtung erstreckende Kante der Strahlteiler- und Strahlvereinigungseinheit 1 angrenzt, wie dies insbesondere aus der Draufsicht in Fig. 3a deutlich ersichtlich ist. Auf diese Weise wird der in Fig. 3a von links auf die Strahlformungseinheit zulaufende Lichtstrahl 17 mit dem in Fig. 3a oberen Teilstrahlbündel 17a, b an dem Spiegel 15 vorbeilaufen und auf eine erste Eintrittsfläche 18, die in dem eingezeichneten Koordinatensystem eine X,Y-Fläche ist, auftreffen. Dieses Teilstrahlbündel 17a, 17b tritt entsprechend dem Teilstrahlbündel 7a, 7b in Fig. 1 durch die Grenzfläche 6 und die Strahlteiler- und Strahlvereinigungseinheit 1 im wesentlichen ungehindert durch und verlässt diese durch die gegenüberliegende Austrittsfläche 19.

Das in Fig. 3a untere Teilstrahlbündel 17c, 17d trifft in Z-Richtung schon vor der Strahlteiler- und Strahlvereinigungseinheit 1 auf den unter einem Winkel von 45° zur Z-Richtung angeordneten Spiegel 15 und wird von diesem, wie dies aus Fig. 3b ersichtlich ist, nach oben in Y-Richtung abgelenkt. Direkt oberhalb des Spiegels 15 und der Strahlteiler- und Strahlvereinigungseinheit 1 ist auf diesen das Prisma 16 angeordnet. Das Prisma 16 weist in dem abgebildeten Ausführungsbeispiel zwei als gleichschenklig rechtwinklige Dreiecke ausgebildete Grundflächen 20 und drei rechteckige Prismenflächen 21, 22, 23 auf. Das Prisma 16 ist dabei so angeordnet, dass das von dem Spiegel 15 nach oben reflektierte Teilstrahlbündel 17c, 17d durch die zwischen den Hypotenusen der Grundflächen 20 gebildete Prismenfläche 21 in das Prisma 16 eintritt, wobei diese Prismenfläche 21 in dem abgebildeten Koordinatensystem eine X,Z-Fläche ist und auf der Oberseite der als Polarisationswürfel ausgebildeten Strahlteiler- und Strahlvereinigungseinheit 1 zumindest abschnittsweise aufliegt. Weiterhin ist das Prisma 16 so ausgerichtet, dass die Hypotenusen der Grundflächen 20 mit den Seiten der oberen Würfelfläche der Strahlteiler- und Strahlvereinigungseinheit 1 einen Winkel von 45° einschließen. Weiterhin ist das Prisma so ausgerichtet, dass die Projektion der Scheitellinie 24 des Prismas in die XZ-Ebene den Verbindungsbereich zwischen Strahlteiler- und Strahlvereinigungseinheit 1 und Spiegel 15 exakt schneidet, wie dies aus der Draufsicht gemäß Fig. 3a deutlich ersichtlich ist.

Fig. 3 lässt sich weiterhin entnehmen, dass das von unten in das Prisma 16 eintretende Teilstrahlbündel 16c, 16d an den beiden Prismenflächen 22, 23 gespiegelt wird. Diese Prismenflächen können hierzu gegebenenfalls zusätzlich verspiegelt sein. Von der zweiten dieser Prismenflächen, das heißt von der Fläche 23, wird das Teilstrahlbündel 17c, 17d nach unten reflektiert und verlässt die als Verbindungsfläche zwischen den Hypotenusen gebildete Prismenfläche 21 nach unten in negativer Y-Richtung und tritt durch die als zweite Eintrittsfläche 25 dienende obere Würfelfläche der Strahlteiler- und Strahlvereinigungseinheit 1 in diese ein.

Aufgrund der vorangehend beschriebenen Anordnung des Prismas 16 wird das Teilstrahlbündel 17c, 17d bei der doppelten Reflektion an den Prismenflächen 22, 23 nicht nur von oben in die Strahlteiler- und Strahlvereinigungseinheit 1 umgelenkt, sondern auch um 90° in sich gedreht. Diese Drehung um 90° soll durch die beiden schraffierten Flächen 26, 27 angedeutet werden, die in Fig. 3a abgebildet sind. Diese schraffierten Flächen 26, 27 geben in etwa den Querschnitt des sich zwischen den Strahlen 17c und 17d erstreckenden Teilstrahlbündels nach Reflektion in die Y-Richtung bzw. die -Y-Richtung wieder. Wie aus Fig. 3a deutlich ersichtlich ist, sind die beiden schraffierten Flächen 26, 27 um einen Winkel von 90° zueinander verdreht.

In Fig. 3b ist ebenfalls vermittels Pfeilen 28 die Richtung der Linearpolarisation des Lichtstrahls 17 in Y-Richtung angedeutet. Wie ebenfalls auf der rechten Seite in Fig. 3b angedeutet ist, erfährt das Teilstrahlbündel 17c, 17d durch die 90°-Drehung in dem Prisma 16 auch eine Drehung der Polarisationsrichtung, so dass das Teilstrahlbündel 17c, 17d nach dem Durchgang durch das Prisma 16 in X-Richtung linearpolarisiert ist, wie dies durch die Pfeile 29 angedeutet ist. Aufgrund der zu der Polarisation des Teilstrahlbündels 17a, 17b senkrechten Linearpolarisation des Teilstrahlbündels 17c, 17d wird dieses an der Grenzfläche 6 reflektiert und verlässt die Strahlteiler- und Strahlvereinigungseinheit 1 aus der gleichen Austrittsfläche 19, aus der auch das Teilstrahlbündel 17a, 17b austritt.

Aus Fig. 4a ist der Querschnitt 30 des in die Strahlformungseinheit eintretenden Lichtstrahls 17 ersichtlich. Nach dem Hindurchtritt durch die Strahlformungseinheit weist der Lichtstrahl 17 den aus Fig. 4b ersichtlichen Querschnitt 31 auf, der eine Überlappung des sich im wesentlichen in X-Richtung erstreckenden Querschnitts des Teilstrahlbündel 17a, 17b und des sich im wesentlichen in Y-Richtung erstreckenden Querschnitts des Teilstrahlbündel 17c, 17d darstellt. Daher ist der Querschnitt 31 im wesentlichen kreuzförmig. Die Pfeile 28, 29 deuten an, dass der die Strahlformungseinheit verlassende Lichtstrahl 17 ebenfalls zumindest abschnittsweise unpolarisiert ist. Fig. 4b lässt sich zudem noch einmal deutlich entnehmen, dass das Teilstrahlbündel 17c, 17d hinsichtlich seines Querschnitts um 90° gedreht wurde bei dem Hindurchtritt durch das Prisma 16.

Es besteht erfindungsgemäß durchaus auch die Möglichkeit, mehrere der in Fig. 3 abgebildeten Strahlformungseinheiten hintereinander bzw. nacheinander anzuordnen, so dass durch diese Vorrichtung hindurchtretende Lichtstrahlen in jeder der Strahlformungseinheiten eine entsprechende Querschnittsveränderung erfahren. Weiterhin besteht auch die Möglichkeit bei einer erfindungsgemäßen Vorrichtung Strahlformungseinheiten der in Fig. 1 abgebildeten Art mit Strahlformungseinheiten der in Fig. 3 abgebildeten Art nacheinander bzw. hintereinander anzuordnen.

Erfindungsgemäß besteht weiterhin die Möglichkeit, als Strahlteiler- und Strahlvereinigungseinheit 1 anstelle des in Fig. 1 und Fig. 3 abgebildeten Polarisationswürfels ähnlich wirkende Einheiten zu verwenden. Beispielsweise könnte auch ein Glan-Thompson-Prisma Verwendung finden. Wesentlich ist die Tatsache, dass eine derartige Strahlteiler- und Strahlvereinigungseinheit aus zwei Teilen besteht, zwischen denen eine Grenzfläche angeordnet ist. Weiterhin muss die Grenzfläche linearpolarisationsselektiv unter einem vorgegebenen Winkel auf sie auftreffende Lichtstrahlen mindestens einer bestimmten Wellenlänge reflektieren bzw. im wesentlichen ungehindert hindurchtreten lassen. Um eine derartige Wirkung zu erzielen, eignen sich, wie bereits beschrieben, doppelbrechende Materialien, die hinsichtlich ihrer optischen Achse oder ihrer optischen Achsen derart ausgerichtet sind, dass polarisierte Strahlen an einer beispielsweise durch Kitt gebildeten Grenzfläche entsprechend ihrer Polarisation reflektiert bzw. im wesentlichen ungehindert durchgelassen werden.

Weiterhin besteht erfindungsgemäß die Möglichkeit, mehrere Strahlformungseinheiten nebeneinander anzuordnen. Auf diese Weise können von nebeneinander liegenden Lichtquellen ausgehende Lichtstrahlen gleichzeitig bei dem Hindurchtritt durch die nebeneinanderliegenden Strahlformungseinheiten geformt werden. Ein Beispiel für derartige nebeneinanderliegende Lichtquellen ist ein Laserdiodenbarren, der in der Regel äquidistant nebeneinander angeordnete linienförmige Emissionsquellen von Laserlicht aufweist.

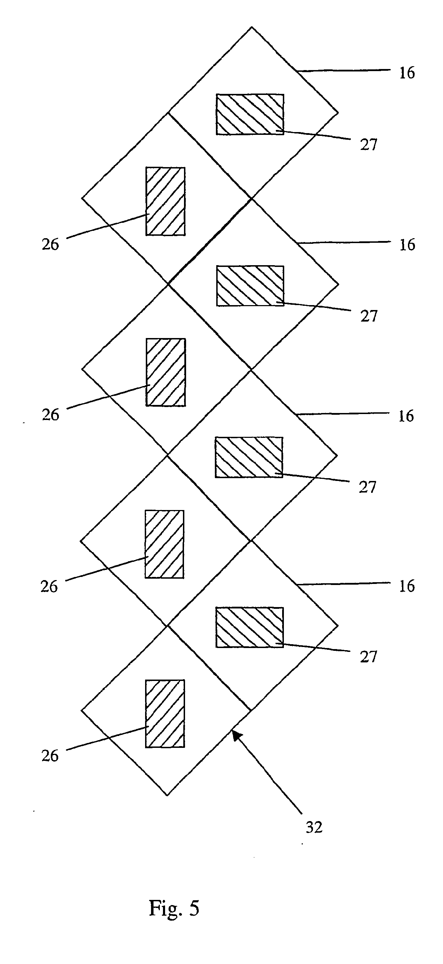

Insbesondere bei der in Fig. 3 abgebildeten Strahlformungseinheit besteht die Möglichkeit, ein Array 32 aus Prismen 16 zu bilden, wie dies in Fig. 5 abgebildet ist. In Fig. 5 sind jeweils bei einem jeden der Prismen 16 die bereits in Fig. 3a abgebildeten schraffierten Flächen 26, 27 angedeutet. Es besteht somit die Möglichkeit vermittels des Arrays 32 beispielsweise bei einem analogen Aufbau zu Fig. 3a mit einer als Polarisationswürfel ausgeführten Strahlteiler- und Strahlvereinigungseinheit 1 und einem Spiegel 15 eine Vielzahl von nebeneinander angeordneten Strahlformungseinheiten zu realisieren, die von nebeneinander angeordneten Lichtquellen ausgehende Lichtstrahlen entsprechend den Abbildungen Fig. 3 bis Fig. 4 formen können.

Es besteht weiterhin die Möglichkeit, ein Prisma 16 als separat einsetzbare Strahldreheinheit für Lichtstrahlen zu verwenden, wobei diese Strahldreheinheit einen Lichtstrahl um 90° drehen kann. Gegenüber aus dem Stand der Technik bekannten Strahldreheinheiten stellt die Verwendung eines Prismas 16 eine ausgesprochen kostengünstige Alternative dar.

Insbesondere kann ein Array 32 aus Prismen 16 als Strahldreheinheit für von einem Laserdiodenbarren ausgehende nebeneinander angeordnete Lichtstrahlen dienen. Die aus dem Array 32 von Prismen 16 heraustretenden Lichtstrahlen sind gegenüber den ursprünglichen Lichtstrahlen parallel versetzt und bewegen sich entgegen der Eintrittsrichtung aus dem Array 32 heraus. Dies ist in Fig. 5 deutlich ersichtlich, in der beispielsweise die schraffierten Flächen 26 den Querschnitt von Lichtstrahlen wiedergeben können, die sich in eine Richtung aus der Zeichenfläche herausbewegen, wohingegen die den aus dem Array 32 austretenden Strahlen entsprechenden schraffierten Flächen 27 den Querschnitt von Strahlen wiedergeben, die sich in die Zeichenebene hineinbewegen. Es ist deutlich ersichtlich, dass zusätzlich zu der Drehung des Querschnitts eine Versetzung der Lichtstrahlen nach rechts und nach oben in Fig. 5 stattgefunden hat. Bei entsprechender Anordnung beispielsweise eines Laserdiodenbarrens vor den Eintrittsflächen des Arrays 32 könnten dementsprechend die aus dem Array 32 austretenden Lichtstrahlen beispielsweise über den Laserdiodenbarren hinweg geführt werden.

## Patentansprüche

1. Vorrichtung für die Formung des Querschnitts (30) eines Lichtstrahls (17) umfassend mindestens eine Strahlformungseinheit mit Strahlteilermitteln, Strahlumlenkmitteln und Strahlvereinigungsmitteln, wobei die Strahlteilermittel einen auf die Strahlformungseinheit auftreffenden Lichtstrahl (17) in zwei Teilstrahlen (17a, 17b, 7c, 7d, 17c, 17d) aufteilen können, wobei die Strahlumlenkmittel mindestens einen der Teilstrahlen (17c, 17d) auf die Strahlvereinigungsmittel umlenken können, und wobei die Strahlvereinigungsmitel die beiden Teilstrahlen (17a, 17b, 7c, 7d, 17c, 17d) zusammenfügen können, derart, dass der Querschnitt (31) des aus der Strahlformungseinheit austretenden Lichtstrahls (17) im Vergleich zu dem in die Strahlformungseinheit eintretenden Lichtstrahl (17) in mindestens einer Richtung (x) verkleinert ist, wobei das Strahlvereinigungsmittel als polarisationsselektive Strahlteiler- und Strahlvereinigungseinheit (1) ausgebildet ist, die mindestens zwei Teile (4, 5) mit einer zwischen diesen angeordneten Grenzfläche (6) umfasst, wobei die beiden aufgetrennten Teilstrahlen (17a, 17b; 7c, 7d, 17c, 17d) aus unterschiedlichen Richtungen auf die Grenzfläche auftreffen können und wobei dabei in Abhängigkeit von ihrer Linearpolarisation einer der Teilstrahlen (17a, 17b) die Grenzfläche ungehindert passieren kann und der andere der Teilstrahlen (17c, 17d) an der Grenzfläche (6) reflektiert werden kann, so dass die beiden Teilstrahlen (17a, 17b; 7c, 7d, 17c, 17d) im Bereich der Grenzfläche (6) zusammengefügt werden und die Strahlteiler- und Strahlvereinigungseinheit (1) im wesentlichen an der gleichen Stelle in die gleiche Richtung verlassen, **dadurch gekennzeichnet, dass** die Strahlformungseinheit ein als Prisma (16) ausgeführtes Polarisationsdrehelement umfasst, das so angeordnet ist, dass der Querschnitt (30, 31) des entsprechenden Teilstrahls (17c, 17d) bei dem Hindurchtritt durch das Prisma (16) gedreht wird, wobei **dadurch** auch eine entsprechende Drehung der Linearpolarisation dieses Teilstrahls (17c, 17d) erfolgt.

2. Vorrichtung nach Anspruch 1, **dadurch gekennzeichnet, dass** die Strahlteiler- und Strahlvereinigungseinheit (1) zumindest abschnittsweise aus einem doppelbrechenden Material besteht.

3. Vorrichtung nach einem der Ansprüche 1 oder 2, **dadurch gekennzeichnet, dass** die Strahlteiler- und Strahlvereinigungseinheit (1) als Glan-Thompson-Prisma ausgeführt ist.

4. Vorrichtung nach Anspruch 1, **dadurch gekennzeichnet, dass** die Strahlteiler- und Strahlvereinigungseinheit (1) als Polarisationswürfel ausgeführt ist, der aus zwei im wesentlichen identischen prismenähnlichen Teilen (4, 5) besteht, die eine Grenzfläche (6) längs einer Diagonalfläche des Würfels miteinander bilden.

5. Vorrichtung nach Anspruch 4, **dadurch gekennzeichnet, dass** mindestens eines der beiden Teile (4, 5) im Bereich der Grenzfläche (6) mit einer polarisationsselektiven Beschichtung versehen ist.

6. Vorrichtung nach einem der Ansprüche 1 bis 5, **dadurch gekennzeichnet, dass** das Polarisationsdrehelement die Linearpolarisation eines der beiden Teilstrahlen (17c, 17d) um einen Winkel von 90°drehen kann.

7. Vorrichtung nach einem der Ansprüche 1 bis 6, **dadurch gekennzeichnet, dass** die Strahlteiler- und Strahlvereinigungseinheit (1) derart in dem Strahlengang des auf sie auftreffenden Lichtstrahls (17) angeordnet werden kann, dass sie sowohl als Strahlteilermittel als auch als Strahlvereinigungsmittel dient, indem der erste Teilstrahl (17a, 17b) direkt auf eine erste Eintrittsfläche (18) der Strahlteiler- und Strahlvereinigungseinheit (1) auftrifft, wohingegen der zweite Teilstrahl (17c, 17d) an der ersten Eintrittsfläche (18) vorbeilaufen kann und von den Strahlumlenkmitteln auf eine zweite Eintrittsfläche (25) gelenkt werden kann.

8. Vorrichtung nach einem der Ansprüche 1 bis 7, **dadurch gekennzeichnet, dass** die Strahlumlenkmittel einen Spiegel (15) umfassen, der vorzugsweise unter einem Winkel von 45° in dem zweiten der beiden Teilstrahlen (17c, 17d) angeordnet ist.

9. Vorrichtung nach einem der Ansprüche 1 bis 8, **dadurch gekennzeichnet, dass** die Strahlumlenkmittel ein Prisma (16) umfassen, in dem der entsprechende Teilstrahl (17c, 17d) reflektiert, insbesondere zweimal reflektiert werden kann.

10. Vorrichtung nach Anspruch 9, **dadurch gekennzeichnet, dass** das Prisma (16) gleichzeitig als Polarisationsdrehelement und als Umlenkmittel dient.

11. Vorrichtung nach Anspruch 10, **dadurch gekennzeichnet, dass** das Prisma (16), der Spiegel (15) und die Strahlteiler- und Strahlvereinigungseinheit (1) derart angeordnet sind, dass ein Teilstrahl (17a, 17b) direkt auf die erste Eintrittsfläche (18) der Strahlteiler- und Strahlvereinigungseinheit (1) auftreffen kann, wohingegen der zweite Teilstrahl (17c, 17d) von dem Spiegel (15) in das Prisma (16) reflektiert wird, in dem der Strahlquerschnitt (30) des Tellstrahls (17c, 17d) um 90° gedreht wird, und aus dem der Teilstrahl (17c, 17d) in eine zweite Eintrittsfläche (25) der Strahlteiler- und Strahlvereinigungseinheit (1) eintreten kann.

12. Vorrichtung nach einem der Ansprüche 1 bis 11, **dadurch gekennzeichnet, dass** die Vorrichtung mehr als eine Strahlformungseinheit umfasst, die derart nacheinander angeordnet sind, dass der Querschnitt (30) des Lichtstrahls (17) in jeder der Strahlformungseinheiten verändert, insbesondere in einer Richtung verkleinert werden kann.

13. Vorrichtung nach einem der Ansprüche 1 bis 12, **dadurch gekennzeichnet, dass** die Vorrichtung mehr als eine Strahlformungseinheit umfasst, die derart nebeneinander angeordnet sind, dass von nebeneinanderliegenden Lichtquellen ausgehende Lichtstrahlen in den nebeneinander angeordneten Strahlformungseinheiten verändert, insbesondere in einer Richtung verkleinert werden können.

14. Vorrichtung nach Anspruch 13, **dadurch gekennzeichnet, dass** die nebeneinander angeordneten Strahlformungseinheiten ein Array (32) von Prismen (16) umfassen, wobei jedes der einzelnen Prismen (16) des Arrays (32) gleichzeitig als Polarisationsdrehelement und als Umlenkmittel für eine jede der einzelnen Strahlformungseinheiten dient.

15. Anordnung zur Einkopplung eines von einer langgestreckten Laserlichtquelle ausgehenden Lichtstrahls mit einem länglichen Querschnitt in einer Lichtleitfaser, umfassend eine Laserlichtquelle, mindestens eine Kollimiereinheit für die Kollimierung des von der Laserlichtquelle ausgehenden Lichtstrahls, mindestens eine Fokussiereinheit für die Fokussierung des Lichtstrahls auf eine Lichtleitfaser, **dadurch gekennzeichnet, dass** die Anordnung weiterhin eine in dem Strahlengang des Lichtstrahls angeordnete Vorrichtung nach einem der Ansprüche 1 bis 14 umfasst.

16. Strahldreheinheit für eine Vorrichtung nach einem der Ansprüche 1 bis 14 oder für eine Anordnung nach Anspruch 15, wobei die Strahldreheinheit mindestens ein Prisma (16) umfasst, das derart in dem Strahlengang mindestens eines Lichtstrahls (17) angeordnet werden kann, dass der Querschnitt (30, 31) eines durch das mindestens eine Prisma (16) hindurchtretenden Lichtstrahls (17) durch mindestens zwei Reflexionen gedreht werden kann, wobei insbesondere eine Drehung um 90° erfolgen kann, **dadurch gekennzeichnet, dass** das mindestens eine Prisma (16) zwei als gleichschenklig rechtwinklige Dreiecke ausgebildete Grundflächen (20) und drei rechteckige Prismenflächen (21, 22, 23) aufweist, wobei der durch das mindestens eine Prisma (16) hindurchtretende Lichtstrahl (17) an den beiden Prismenflächen (22, 23) gespiegelt werden kann, die sich zwischen den Katheten der Grundflächen (20) erstrecken.

17. Strahldreheinheit nach Anspruch 16, **dadurch gekennzeichnet, dass** die Strahldreheinheit eine Anzahl von Prismen (16) umfasst, die zu einem Array (32) zusammengefasst sind, so dass die Querschnitte von von nebeneinander angeordneten Lichtquellen ausgehenden Lichtstrahlen gedreht werden können.

## Claims

1. Device for shaping the cross section (30) of a light beam (17), comprising at least one beam-shaping unit with beam-splitter means, beam-deflecting means and beam-recombining means, the beam-splitter means being able to split a light beam (17) impinging on the beam-shaping unit into two component beams (17a, 17b, 7c, 7d, 17c, 17d), the beam-deflecting means being able to deflect at least one of the component beams (17c, 17d) onto the beam-recombining means, and the beam-recombining means being able to merge the two component beams (17a, 17b, 7c, 7d, 17c, 17d) in such a way that by comparison with the light beam (17) entering the beam-shaping unit, the cross section (31) of the light beam (17) emerging from the beam-shaping unit being reduced in at least one direction (x), the beam-recombining means being designed as a polarization-selective beam-splitter and beam-recombining unit (1) that comprises at least two parts (4, 5) with an interface (6) arranged therebetween, the two separated component beams (17a, 17b; 7c, 7d, 17c, 17d) being able to impinge on the interface from different directions, and it being possible in this case, as a function of its linear polarization, for one of the component beams (17a, 17b) to pass the interface without hindrance and for the other one of the component beams (17c, 17d) to be reflected at the interface (6), such that the two component beams (17a, 17b; 7c, 7d, 17c, 17d) are merged in the region of the interface (6) and leave the beam-splitter and beam-recombining unit (1) substantially at the same location in the same direction, **characterized in that** the beam-shaping unit comprises a polarization rotation element which is designed as a prism (16) and is arranged such that the cross section (30, 31) of the corresponding component beam (17c, 17d) is rotated upon passing through the prism (16), a corresponding rotation of the linear polarization of this component beam (17c, 17d) thereby taking place.

2. Device according to Claim 1, **characterized in that** the beam-splitter and beam-recombining unit (1) consists at least in sections of a birefringent material.

3. Device according to either of Claims 1 and 2, **characterized in that** the beam-splitter and beam-recombining unit (1) is designed as a Glan-Thompson prism.

4. Device according to Claim 1, **characterized in that** the beam-splitter and beam-recombining unit (1) is designed as a polarization cube which comprises two substantially identical prism-like parts (4, 5) which form with one another an interface (6) along a diagonal surface of the cube.

5. Device according to Claim 4, **characterized in that** at least one of the two parts (4, 5) is provided in the region of the interface (6) with a polarization-selective coating.

6. Device according to one of Claims 1 to 5,
**characterized in that** the polarization rotation element can rotate the linear polarization of one of the two component beams (17c, 17d) by an angle of 90°.

7. Device according to one of Claims 1 to 6, **characterized in that** the beam-splitter and beam-recombining unit (1) can be arranged in the beam path of the light beam (17) impinging on it in such a way that serves both as beam-splitter means and as beam-recombining means by virtue of the fact that the first component beam (17a, 17b) impinges directly on a first entrance surface (18) of the beam-splitter and beam-recombining unit (1), whereas the second component beam (17c, 17d) can run past the first entrance surface (18) and can be directed onto a second entrance surface (25) by the beam-deflecting means.

8. Device according to one of Claims 1 to 7, **characterized in that** the beam-deflecting means comprise a mirror (15) which is preferably arranged at an angle of 45° in the second of the two component beams (17c, 17d).

9. Device according to one of Claims 1 to 8, **characterized in that** the beam-deflecting means comprise a prism (16) in which the corresponding component beam (17c, 17d) can be reflected, in particular be reflected twice.

10. Device according to Claim 9, **characterized in that** the prism (16) serves simultaneously as polarization rotation element and as deflecting means.

11. Device according to Claim 10, **characterized in that** the prism (16), the mirror (15) and the beam-splitter and beam-recombining unit (1) are arranged in such a way that a component beam (17a, 17b) can impinge directly on the first entrance surface (18) of the beam-splitter and beam-recombining unit (1), whereas the second component beam (17c, 17d) is reflected by the mirror (15) into the prism (16), in which the beam cross section (30) of the component beam (17c, 17d) is rotated by 90°, and from which the component beam (17c, 17d) can enter a second entrance surface (25) of the beam-splitter and beam-recombining unit (1).

12. Device according to one of Claims 1 to 11, **characterized in that** the device comprises more than one beam-shaping unit which are arranged one after another in such a way that the cross section (30) of the light beam (17) can be varied in each of the beam-shaping units, in particular can be reduced in one direction.

13. Device according to one of Claims 1 to 12, **characterized in that** the device comprises more than one beam-shaping unit which are arranged one after another in such a way that light beams issuing from light sources situated next to one another can be varied in the beam-shaping units arranged next to one another, in particular can be reduced in one direction.

14. Device according to Claim 13, **characterized in that** the beam-shaping units arranged next to one another comprise an array (32) of prisms (16), each of the individual prisms (16) of the array (32) simultaneously serving as a polarization rotation element and as deflecting means for each of the individual beam-shaping units.

15. Arrangement for launching a light beam, issuing from an elongated laser light source, with an elongated cross section in an optical fibre, comprising a laser light source, at least one collimator unit for collimating the light beam issuing from the laser light source, at least one focusing unit for focusing the light beam onto an optical fibre, **characterized in that** the arrangement further comprises a device, arranged in the beam path of the light beam, according to one of Claims 1 to 14.

16. Beam rotation unit for a device according to one of Claims 1 to 14 or for an arrangement according to Claim 15, the beam rotation unit comprising at least one prism (16) which can be arranged in the beam path of at least one light beam (17) in such a way that the cross section (30, 31) of a light beam (17) passing through the at least one prism (16) can be rotated by at least two reflections, it being possible, in particular, for a rotation by 90° to take place, **characterized in that** the at least one prism (16) has two base faces (20) designed as isosceles right-angled triangles and three rectangular prism faces (21, 22, 23), the light beam (17) passing through the at least one prism (16) being capable of reflection at the two prism faces (22, 23) which extend between the perpendicular sides of the base faces (20).

17. Beam rotation unit according to Claim 16, **characterized in that** the beam rotation unit comprises a number of prisms (16) which are combined to form an array (32) such that the cross sections of light beams issuing from light sources arranged next to one another can be rotated.

## Revendications

1. Dispositif pour le formage de la section transversale (30) d'un rayon lumineux (17) comprenant au moins une unité de formage de rayon munie de moyens séparateurs de rayon, de moyens de déviation de rayon et de moyens de convergence de rayons, les moyens séparateurs de rayon pouvant séparer un rayon lumineux (17) incident sur l'unité de formage de rayon en deux rayons partiels (17a, 17b, 7c, 7d, 17c, 17d), les moyens de déviation de rayon pouvant dévier au moins l'un des rayons partiels (17c, 17d) vers les moyens de convergence de rayons et les moyens de convergence de rayons pouvant rassembler les deux rayons partiels (17a, 17b, 7c, 7d, 17c, 17d) de telle sorte que la section transversale (31) du rayon lumineux (17) qui sort de l'unité de formage de rayon est réduite dans au moins une direction (x) en comparaison du rayon lumineux (17) qui entre dans l'unité de formage de rayon, le moyen de convergence de rayons étant réalisé sous la forme d'une unité de séparation de rayon et de convergence de rayons (1) à polarisation sélective qui comprend au moins deux parties (4, 5) avec une surface de délimitation (6) disposée entre celles-ci, les deux rayons partiels (17a, 17b, 7c, 7d, 17c, 17d) séparés pouvant venir frapper la surface de délimitation depuis des directions différentes et l'un des rayons partiels (17a, 17b) pouvant ici traverser librement la surface de délimitation en fonction de sa polarisation linéaire et l'autre des rayons partiels (17c, 17d) pouvant être réfléchi sur la surface de délimitation (6) de sorte que les deux rayons partiels (17a, 17b, 7c, 7d, 17c, 17d) sont assemblés dans la zone de la surface de délimitation (6) et quittent l'unité de séparation de rayon et de convergence de rayons (1) pour l'essentiel au même endroit dans la même direction, **caractérisé en ce que** l'unité de formage de rayon comprend un élément rotatif de polarisation réalisé sous la forme d'un prisme (16) qui est disposé de telle sorte que la section transversale (30, 31) du rayon partiel (17c, 17d) correspondant subit une rotation en traversant le prisme (16), une rotation correspondante de la polarisation linéaire de ce rayon partiel (17c, 17d) ayant ainsi également lieu.

2. Dispositif selon la revendication 1, **caractérisé en ce que** l'unité de séparation de rayon et de convergence de rayons (1) se compose au moins dans certaines portions d'un matériau à biréfringence.

3. Dispositif selon l'une des revendications 1 ou 2, **caractérisé en ce que** l'unité de séparation de rayon et de convergence de rayons (1) est réalisée sous la forme d'un prisme de Glan-Thompson.

4. Dispositif selon la revendication 1, **caractérisé en ce que** l'unité de séparation de rayon et de convergence de rayons (1) est réalisée sous la forme d'un cube de polarisation qui se compose de deux parties (4, 5) similaires à des prismes et pour l'essentiel identiques, lesquelles forment ensemble une surface de délimitation (6) le long d'une surface diagonale du cube.

5. Dispositif selon la revendication 4, **caractérisé en ce qu'**au moins l'une des deux parties (4, 5) est munie d'un revêtement à polarisation sélective dans la zone de la surface de délimitation (6).

6. Dispositif selon l'une des revendications 1 à 5, **caractérisé en ce que** l'élément rotatif de polarisation peut faire pivoter la polarisation linéaire de l'un des deux rayons partiels (17c, 17d) d'un angle de 90°.

7. Dispositif selon l'une des revendications 1 à 6, **caractérisé en ce que** l'unité de séparation de rayon et de convergence de rayons (1) peut être disposée dans le trajet du rayon lumineux (17) qui lui est incident de telle sorte qu'elle sert à la fois de moyens séparateurs de rayon et de moyens de convergence de rayons **en ce que** le premier rayon partiel (17a, 17b) vient frapper directement une première surface d'entrée (18) de l'unité de séparation de rayon et de convergence de rayons (1), alors que le deuxième rayon partiel (17c, 17d) peut passer devant la première surface d'entrée (18) et peut être dévié par les moyens de déviation du rayon vers une deuxième surface d'entrée (25).

8. Dispositif selon l'une des revendications 1 à 7, **caractérisé en ce que** les moyens de déviation de rayon comprennent un miroir (15) qui est disposé de préférence sous un angle de 45° dans le deuxième des deux rayons partiels (17c, 17d).

9. Dispositif selon l'une des revendications 1 à 8, **caractérisé en ce que** les moyens de déviation de rayon comprennent un prisme (16) dans lequel le rayon partiel (17c, 17d) correspondant peut être réfléchi, notamment réfléchi deux fois.

10. Dispositif selon la revendication 9, **caractérisé en ce que** le prisme (16) sert en même temps d'élément rotatif de polarisation et de moyen de déviation.

11. Dispositif selon la revendication 10, **caractérisé en ce que** le prisme (16), le miroir (15) et l'unité de séparation de rayon et de convergence de rayons (1) sont disposés de telle sorte qu'un rayon partiel (17a, 17b) peut venir frapper directement la première surface d'entrée (18) de l'unité de séparation de rayon et de convergence de rayons (1), alors que le deuxième rayon partiel (17c, 17d) est réfléchi du miroir (15) dans le prisme (16), dans lequel la section transversale (30) du rayon partiel (17c, 17d) est pivotée de 90° et depuis lequel le rayon partiel (17c, 17d) peut entrer dans une deuxième surface d'entrée (25) de l'unité de séparation de rayon et de convergence de rayons (1).

12. Dispositif selon l'une des revendications 1 à 11, **caractérisé en ce que** le dispositif comprend plus d'une unité de formage de rayon, lesquelles sont disposées les unes après les autres de telle sorte que la section transversale (30) du rayon lumineux (17) peut être modifiée dans chacune des unités de formage de rayon, notamment réduite dans une direction.

13. Dispositif selon l'une des revendications 1 à 12, **caractérisé en ce que** le dispositif comprend plus d'une unité de formage de rayon, lesquelles sont disposées les unes à côté des autres de telle sorte que les rayons lumineux qui sortent des sources de lumière disposées les unes à côté des autres peuvent être modifiés dans les unités de formage de rayon disposées les unes à côté des autres, notamment réduits dans une direction.

14. Dispositif selon la revendication 13, **caractérisé en ce que** les unités de formage de rayon disposées les unes à côté des autres comprennent un réseau (32) de prismes (16), chacun des prismes individuels (16) du réseau (32) servant en même temps d'élément rotatif de polarisation et de moyen de déviation pour chacune des unités de formage de rayon individuelles.

15. Arrangement pour injecter dans une fibre optique un rayon lumineux à section transversale allongée émanant d'une source de lumière laser étendue en longueur, comprenant une source de lumière laser, au moins une unité de collimation pour collimater le rayon lumineux émanant de la source de lumière laser, au moins une unité de concentration pour concentrer le rayon lumineux sur une fibre optique, **caractérisé en ce que** l'arrangement comprend en plus un dispositif selon l'une des revendications 1 à 14 disposé dans le trajet du rayon lumineux.

16. Unité de rotation de rayon pour un dispositif selon l'une des revendications 1 à 14 ou pour un arrangement selon la revendication 15, l'unité de rotation de rayon comprenant au moins un prisme (16) qui peut être disposé dans le trajet d'au moins un rayon lumineux (17) de telle sorte que la section transversale (30, 31) d'un rayon lumineux (17) qui passe à travers l'au moins un prisme (16) peut subir une rotation par au moins deux réflexions, une rotation de 90° pouvant notamment avoir lieu, **caractérisée en ce que** l'au moins un prisme (16) présente deux surfaces de base (20) réalisées sous la forme de triangles rectangles équilatéraux ainsi que trois surfaces de prisme rectangulaires (21, 22, 23), le rayon lumineux (17) qui traverse l'au moins un prisme (16) pouvant être réfléchi sur les deux surfaces de prisme (22, 23) qui s'étendent entre les côtés de l'angle droit des surfaces de base (20).

17. Unité de rotation de rayon selon la revendication 16, **caractérisée en ce que** l'unité de rotation de rayon comprend une pluralité de prismes (16) qui sont regroupés en un réseau (32) de telle sorte que les sections transversales des rayons lumineux qui sortent de sources de lumière disposées les unes à côté des autres peuvent être soumis à une rotation.
